# EUROPEAN PATENT SPECIFICATION

(11) **EP 2 887 847 B1**
(45) Date of publication and mention of the grant of the patent: **13.03.2019**
(21) Application number: 13813233.7
(22) Date of filing: 01.07.2013
(51) Int. Cl.: A47J 37/04, F24C 7/04, A47J 27/00, F24C 15/32, A47J 36/02

(54) **OVEN**
OFEN
FOUR

(30) Priority: 06.07.2012 SE 1250788
(43) Date of publication of application: 01.07.2015
(73) Proprietor: Eatgood Sweden AB, 504 51 Borås (ES)
(72) Inventor: ÖNNERMARK, Henrik, S-504 47 Borås (SE)
(74) Representative: AWA Sweden AB
(86) International application number: PCT/SE2013/050841
(87) International publication number: WO 2014/007740

(56) References cited:
- EP-A1- 0 632 875
- EP-A1- 1 388 314
- WO-A1-2010/027316
- WO-A1-2010/027316
- CN-Y- 2 901 883
- GB-A- 2 119 922
- JP-A- H11 299 651
- US-A- 4 068 572
- US-A- 4 155 294
- US-A- 4 295 419
- US-A- 4 491 065
- US-A- 5 339 726

## Description

### Technical field

The present invention relates to the field of ovens for preparation of food using fast moving hot air. In particular, the invention relates to the field of convection ovens. The invention furthermore relates to a receptacle for use in combination with an oven.

### Background

A convection oven is an oven that imparts heat onto the food to be cooked by use of fast moving hot air. Fans are used to force hot air in the oven to move fast past the food, as compared to a conventional oven which relies on convective heat transfer unassisted by fans. By circulating hot air past the food the food is cooked / prepared more quickly in a convection oven than in a conventional oven. In addition, "hot spots" and uneven temperature distribution in the convection oven is eliminated by the air circulation, such that the food is cooked more evenly.

GB 2119922A, WO2010/027316 A1, EP 0632875 and US 4 068 572 disclose different types of ovens for preparation of food arranged in an oven compartment.

Convection ovens may for instance be used for oil-free deep-frying of potatoes and other foodstuff. Such deep-frying involves a first preparation stage in which the elevated temperature of the foodstuff being prepared leads to release of water contained in the foodstuff. As a result, vapour builds up in the oven compartment and contributes to increasing the heat transporting capacity of the circulating hot air. In a second stage, in order to provide the foodstuff with a crisp and/or nicely browned surface, the vapour is quickly vented out, such that the foodstuff is subjected to dry, hot air.

A problem directed to convection ovens, systems and processes that are currently used in combination with a rotating preparation basket for the foodstuff for food preparation, using fast moving hot air, is the formation of tiny carbon particles, carbon specimens, also referred to as carbon specs. These carbon specs stick to the foodstuff being prepared and may give the foodstuff an unappetizing appearance and also affect the taste of the foodstuff. In addition, the carbon specs foul the oven and/or the preparation basket used within the oven, which in turn requires more frequent cleaning of the oven which is time-consuming and costly.

It is desired by restaurants and kitchens as well as consumers of deep-fried food to keep the formation of carbon specs to a minimum. In addition, it is desired by restaurants, especially fast-food restaurants and street kitchens, to keep the time and recourses spent on cleaning to a minimum.

### Summary of the invention

It is an object of the present invention to provide an oven utilizing fast moving hot air for preparation of food, in which the amount of carbon specs on the prepared foodstuff is reduced or eliminated.

This object is achieved by an oven for preparation of food and a receptacle for use in an oven according to the definition in the independent claims.

The claimed oven for preparation of food comprises:
an oven compartment;
an air permeable preparation basket arranged in said oven compartment;
a heat source; and
a fan arranged to circulate hot air within said oven compartment, wherein the oven further comprises a receptacle formed to fit in said preparation basket and to receive said food, said receptacle comprising a non-stiff receptacle wall at least partly formed by a net structure with through holes, said receptacle preserve the food from contact with the preparation basket, and the preparation basket is rotatably arranged in the oven compartment and the receptacle rotating together with the preparation basket.

The claimed oven fulfills the desires defined above by providing a non-stiff receptacle that during food preparation is arranged within the preparation basket and encloses the food. The preparation basket is provided with through holes in order to not interfere with, or stop, the air that is circulating within the oven compartment through the preparation basket and around the food. Several tests have verified that a large amount of the carbon specs that are circulating together with the air in the oven compartment adhere to the preparation basket, and the receptacle wall instead of the ending up at the surface of the prepared food. Thereby the quality of the prepared food is increased considerably.

In one embodiment of the invention, the receptacle is removably arranged in the preparation basket. This is favorable since the receptacle could be removed from the preparation basket and cleaned separately to remove the carbon specs adhered to the surface of the receptacle.

In one embodiment of the invention, the net structure (11) comprises a non-stick surface. This embodiment is favorable since the non-stick characteristic of the surface result in that the major part of the carbon specs passing through the preparation basket stick to the preparation basket instead of the receptacle. Thereby the amount of carbon specs that is ending up on the surface of the food is reduced. Furthermore, the non-stick characteristic of the net-structure facilitates the removal of adhered carbon specs during cleaning of the receptacle which further reduces the risk for carbon specs on the food enclosed by the receptacle. Furthermore, the areas of the receptacle not formed by the net-structure could also be provided with a non-stick surface.

In one embodiment of the invention, the non-stick surface is a coating comprising polytetrafluoroethylene, non-stick ceramic coatings or non-stick silicone. These are well known materials that provide the desired non-stick characteristics to the surface of the receptacle within the temperature range of up to about 300° C. The materials are furthermore resistant to wear and frequent cleaning operations.

In one embodiment of the invention, the preparation basket is rotatably arranged in the oven and the receptacle is rotating together with the preparation basket. This embodiment is favorable since the rotating preparation basket ensures that all food within the receptacle is prepared simultaneously which is essential to ensure the desired quality of the prepared food. Furthermore, the receptacle that encloses the food provides a protection against deformation and/or damages to the prepared food caused by the rotating preparation basket.

In one embodiment of the invention, the through holes have a rectangular, circular, triangular shape. The through holes could have any possible shape but the suggested shapes provide the desired stability to the receptacle which facilitates the handling of the receptacle during mounting, cleaning and filling or emptying of the receptacle.

In one embodiment of the invention, the through holes have a smallest width that is at least 2 mm and / or the net structure consists of at least 50 % of through holes. As described above, the through holes could have many different shapes. It is however essential in order to ensure the desired preparation of the food that the width of the holes is at least 2 mm to ensure that air is allowed to pass through the receptacle and around the food within the receptacle. An alternative definition of the net-structure is that the net-structure consists of at least 50% of through holes in order to ensure enough holes in the receptacle wall to allow the desired stream of air through the receptacle.

In one embodiment of the invention, the receptacle is made of a woven, pressed, moulded or die-cast material. These are well known methods for producing different products and ensures the desired shape together with a receptacle that is able to withstand high temperarure and wear.

The different described embodiments of the oven and the receptacle could of course be combined in different ways without departing from the scope of the invention that will be described more in detail in the detailed description.

### Brief description of the Drawings

One embodiment of the oven and receptacle according to the invention is illustrated in the figures, in which:
Fig. 1 illustrates a perspective view of an oven.
Fig. 2 illustrates a schematic cross-sectional view of an oven according to the present invention.
Fig. 3 illustrates a perspective view of a preparation basket of the oven.
Fig. 4a and 4b illustrates perspective views of two embodiments of the receptacle schematically.

### Detailed description

The present invention will now be described more fully hereinafter with reference to the accompanying drawings. Currently preferred embodiments of the invention are shown. These should not be construed as limiting, since the invention may be embodied in many different forms, as set forth in the claims.

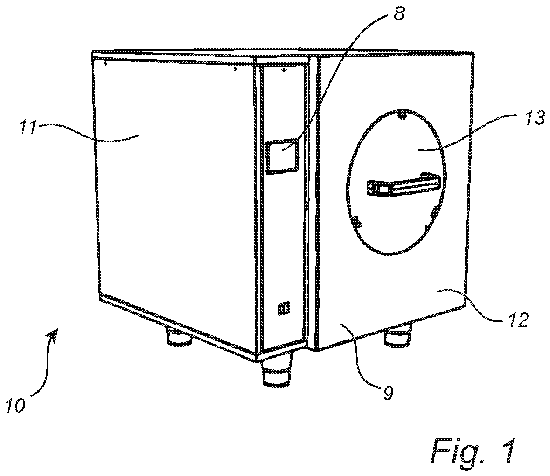

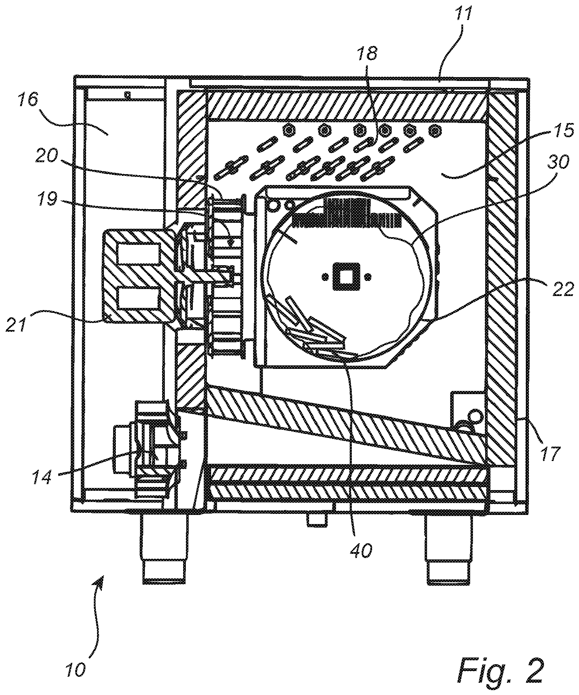

In Fig.1 an oven is illustrated in perspective. The oven 10 comprises a cubical protective housing 11. In a front side 12 of the housing 11 a door 9 is arranged for accessing an oven compartment 15 within the housing. In the illustrated embodiment a circular hatch is arranged in the door 9. The hatch is pulled horizontally from the front side of the oven in order to provide access to a preparation basket 15 that is extracted together with the hatch from its position within the oven compartment. The preparation basket is described in detail further down this document. The interior of the oven will be described with references to figure 2. The front side of the housing furthermore comprises control means 8 such as one or more buttons or levers in order to control the oven and make it possible to select the desired preparation temperature in the oven as well as a preparation program that is suitable for the present foodstuff. The selected temperature and/or program are preferably indicated by one, or more, lighting elements or on a display 14 arranged in the front side of the housing where it is easily detectable. Alternatively, a touch-display could be provided somewhere in the housing where it is easily detectable both for control and display of the selected program of the oven. The outside design of the housing and the different components arranged in the housing could be modified in many different ways in order to adapt the oven to specific desires.

In Fig. 2 a cross-sectional view of an example of the convection oven 10 is illustrated. Within the housing 11, the oven 10 comprises an oven compartment 15 taking up the major part of the space within the housing, and an oven machinery compartment 16 arranged adjacent to the oven compartment. The different functions of the oven as well as the different components of the oven are controlled by a control unit arranged within the oven machinery. The oven compartment 15 is surrounded by at least one layer 17 of insulation in order to prevent that heat from the oven compartment is transferred to the oven machinery compartment 16 and the housing 11 and reduce the energy for heating and maintaining the temperature in the oven compartment.

A number of heat sources 18, or heating elements, are arranged in the oven compartment to heat air in its vicinity, thus elevating the temperature of the air in the oven compartment 15 up to about 300° such that the food product can be prepared. The heat sources 18 may comprise one or more electrical heating elements or may be any other type of heat source suitable for preparation of food, e.g. a gas based heat source, or fire/wood heat source. In the illustrated embodiment of the oven, the heat sources are arranged in the upper section of the oven compartment. The heat sources may alternatively, or also, be arranged outside the oven compartment 15, as long as it heats air within the oven compartment 15 or the heated air is lead to the oven compartment, or is able to enter the oven compartment. Preferably the heat source is able to quickly raise the temperature within the oven compartment to keep the preparation time as short as possible.

A fan 19 is arranged in the oven compartment such that it is in contact with the air within the oven compartment. In the embodiment shown in Fig. 1 the fan comprises a fan wheel 20 positioned within the oven compartment. In alternative embodiment the fan wheel may be positioned outside the oven compartment, although still in contact with the air within the compartment. The fan wheel is arranged to rotate around a substantially horizontal axis by an electrical motor 21 arranged within the oven machinery compartment. The fan wheel is arranged to circulate, or move, the air within the oven compartment, i.e. to force the air within the compartment to circulate within the oven compartment. Through the air circulation, or movement, a larger portion of the air in the oven compartment will come in contact with the heat source and reduce the time for heating the air to the selected preparation temperature. Additionally, the air within the oven compartment will be more efficiently mixed. The air circulation created by the fan wheel 20 thus contributes to more efficient and more even heating of the air within the oven compartment, as compared to an oven with no means for forced air circulation.

A preparation basket 22 is arranged in the oven compartment. The preparation basket is substantially cylindrical with a longitudinal axis A arranged substantially horizontal within the oven compartment. The preparation basket is accessible via the hatch arranged in the front side of the casing 11. In the embodiment shown in Fig. 2 the preparation basket is rotationally arranged in the oven compartment, i.e. it is arranged such that it rotates around its longitudinal axis by an electrical engine, not illustrated in the figure. The illustrated cylindrical embodiment of the preparation basket has a circular inner end 24 and a circular forward end 25. The inner end of the basket is rotatably secured in the back wall of the oven compartment and the forward end arranged adjacent to the forward side of the housing. The preparation basket is formed by a preparation basket wall that is provided with a number of openings and/or holes in order to make it possible for the circulating air to pass through the preparation basket. The size of the openings / holes /slots etc are preferably as large as possible to ensure that as much air as possible is able to flow through the preparation basket.

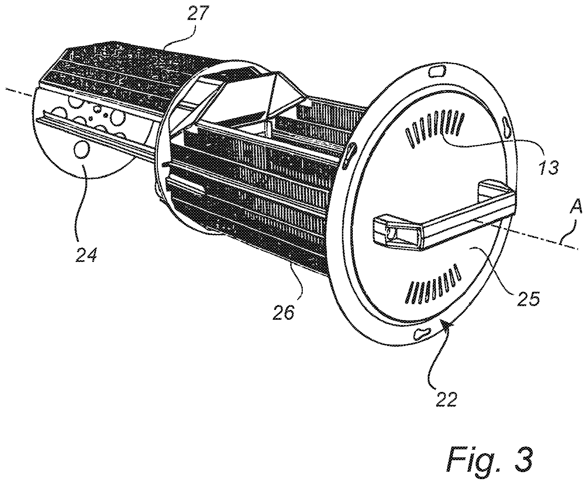

A favorable embodiment of a preparation basket is illustrated in Fig. 3. The preparation basket 21 comprises two members 26, 27 that are axially displaceable relative each other; a stationary member 26 and a movable member 27 that is extractable via the opening in the front side of the housing by pulling the circular hatch 13.

The stationary member 26 comprises an inner base plate 24 and one or more first side wall member(s) 25. The extractable member 27 comprises an outer plate secured in the hatch. The first side wall member and second side wall member are complementary positioned, such that when the two members are pushed together they form the cylindrical preparation basket having side wall members 26, 27 that substantially fully encircle an inner compartment of the preparation basket.

The preparation basket is arranged such that the inner compartment may receive a receptacle 30 according to the invention.

In the retracted state, i.e. when the members are pushed together, the preparation basked is preferably substantially cylinder shaped. Herein, by substantially cylinder shaped is meant having a substantially circular cross section of the same shape and diameter and center point along an axis of the object. By substantially circular cross section is meant that the cross section is circular or circle-like, for example elliptic or convexly polygonal with at least six corners. However, the preparation basket 6 may also have other cross-sections such as triangular or rectangular.

In an extracted state, i.e. when the pull-out member is pulled out from the inner member, as shown in Fig. 3, the first side wall member of the inner member is separated from the second side wall members of the pull-out member. Thereby, an opening to the inner compartment of the pull-out member of the preparation basket is formed.

The side wall members of the preparation basket are designed to at least partially allow heated air to circulate through them, to enable the heated circulating air to efficiently come in contact with the food product to be prepared. The side wall members may for instance, at least partially, comprise a grid, a lattice, a net or a similar structure which is solid enough to hold the receptacle and/or food product, and also perforated enough to efficiently let the hot air circulate through.

It is to be understood that the preparation basket of the present invention may be arranged in a number of different ways and that the example shown in Fig 3 is only one of many different embodiments. The preparation basket need not for instance be of the expandable or pull-out type. In a simpler embodiment the preparation basket comprises a single member with a base plate and side walls that completely encircle the inner compartment of the member. The outer plate may then be arranged as a lid through which the preparation basket may receive the receptacle and/or the food to be prepared. The preparation basket is arranged to be able to receive and hold the receptacle 30 and food product, and also perforated enough to efficiently let the hot air circulate through and come in contact with the food product to be prepared.

The preparation basket is adapted for rotational arrangement in the oven compartment. The rotation ensures a desired movement / mixing of the food within the preparation basket / receptacle which is essential to ensure that all food arranged within the preparation basket / receptacle are exposed to the circulating air. The preparation basket is preferably rotating at substantially constant speed of about 1 to 10 rounds per minute. In the illustrated embodiment the preparation basket is substantially circular but further improvements to facilitate the mixing / movement of the food within the basket could be provided. This could for example be achieved by modifying the design or shape of the shape or interior of the basket or arrange rails or means for generating movements of the food within the preparation basket / receptacle.

In a preferred embodiment, not illustrated, the oven furthermore comprises air guiding rails arranged within the oven compartment to direct the air flow through the prepared food to shorten the preparation time and the final quality of the prepared food, and ventilation means 40, controlled by the control unit, and intended for controlling the exchange of air within the oven compartment which during preparation of some types of food is essential to achieve the desired properties of the food.

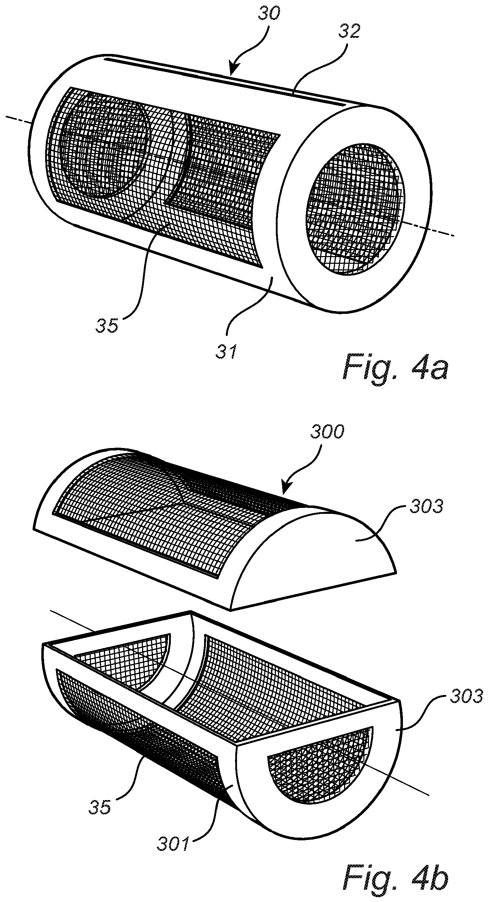

The receptacle 30, 300 is intended to be arranged in the preparation basket during preparation of food. The receptacle encloses the foodstuff during preparation of the food in the oven. The receptacle, illustrated separately in figure 4a and 4b, has a shape corresponding to the shape of the preparation basket in order to facilitate the fitting of the receptacle in the preparation basket.

In the illustrated embodiments 30, 300, the receptacle is substantially cylindrical to fit in the preparation basket 22. The size of the receptacle is preferably only slightly smaller than the preparation basket in order to not reduce the amount of food that could be arranged within the receptacle, and consequently prepared within the oven. The receptacle 30, 300 comprises a receptacle wall 31, 301 that is formed in the desired shape of the receptacle. The receptacle wall is not stiff in order to facilitate the fitting as well as the removal of the receptacle from the preparation basket. A non stiff receptacle wall will also reduce the risk of damages to the food, especially of the food is cut into different pieces such as for example "french fries".

The receptacle either comprises an opening 32 for accessing the interior of the receptacle, alternatively the receptacles wall is divided into two, or more, different sections 302, 303 that are configured to provide a receptacle enclosing the foodstuff when arranged together, and provide access to the interior of the receptacle when separated from each other.

The embodiment of the receptacle illustrated in figure 4a comprises an opening 23that is extending along the axial direction of the receptacle 30. When the hatch 13 and the 26 member of the preparation basket are extracted from the oven and the interior of the preparation basket 22 revealed, the receptacle 30 is arranged within the preparation basket 22 and the foodstuff introduced into the receptacle via the opening 32. When preparation of the foodstuff is desired, the hatch, the preparation basket and the receptacle with the foodstuff are entered into the oven compartment where the circulating heated air is preparing the foodstuff within the receptacle 30.

If the second embodiment of the receptacle 300, Fig. 4b, is used, one of the receptacle sections 303 is arranged within the extractable member 26 of the preparation basket 22 while the other section 302 is arranged in the stationary member 27. The receptacle is thereby accessible at the same time as the preparation basket is extracted together with the hatch from the oven compartment.

The receptacle is either used a predetermined number of preparations before it is removed from the preparation basket and washed separately, for example in a dishwasher, alternatively removed and washed after each preparation has been completed.

The possibility for the air to enter the receptacle is essential to ensure the desired preparation quality of the food within the receptacle and the receptacle wall is at least partly formed by a net structure 35 with through holes in order to make it possible for the circulating air to enter the receptacle. The net structure could be embodied in several different ways but preferably the area of the through holes covers at least 50% of the net structure area. The shape and size of the through holes in the net structure could for example be rectangular, square, triangular or circular, and the diameter or width of the through holes are at least 1mm, and preferably at least 2 mm.

However, the combination of the properties of the preparation basket and the receptacle are important to ensure the desired preparation result and if the preparation basket comprises a basket wall that is easily permeable, the receptacle wall could be less permeable and still ensure the desired preparation result, and consequently the net-structure must be very permeable if a limited amount of the air is allowed to enter the preparation basket.

Furthermore the net structure preferably constitutes 50 % or more of the total peripheral receptacle wall area to ensure the desired flow or air through the receptacle. The net structure is arranged in the peripheral wall of the cylindrical receptacle since the air is directed through the preparation basket and the receptacle perpendicular to the axial direction of the preparation basket and the receptacle.

The net structure could be manufactured in any known way as long as the desired structure with through holes is achieved. Smaller holes will have a negative impact on the possibility for the air to enter the receptacle. The net structure has a non-stick surface to facilitate the removal of adhered carbon specs during washing. The non-stick characteristic is achieved either by manufacturing the net structure in a material with non-stick surface characteristic or apply a coating with the desired non-stick characteristic. There are a number of known materials that have the desired characteristics like for example polytetrafluoroethylene, non-stick ceramic coatings or non-stick silicone that all could be used on the net structure.

## Claims

1. An oven (10) for preparation of food (40), said oven comprising:
a. an oven compartment (15);
b. an air permeable preparation basket (22) arranged in said oven compartment (15);
c. a heat source (18); and
d. a fan (19) arranged to circulate hot air within said oven compartment,
**characterized in that** the oven (10) further comprises a receptacle (30; 300) formed to fit in said preparation basket (22) and to receive said food (40), said receptacle comprising a non-stiff receptacle wall (31; 301) at least partly formed by a net structure (35) with through holes, said receptacle preserve the food from contact with the preparation basket, and **in that** the preparation basket is rotatably arranged in the oven compartment and the receptacle rotating together with the preparation basket.

2. The oven of claim 1, wherein the receptacle (30; 300) is removably arranged in the preparation basket (22).

3. The oven of claim 1, wherein the net structure (11) comprises a non-stick surface.

4. The oven of claim 2, wherein the non-stick surface is a coating comprising polytetrafluoroethylene, non-stick ceramic coatings or non-stick silicone.

5. The oven of any of the previous claims, wherein the through holes (12) have a rectangular, circular, triangular shape.

6. The oven of any of the previous claims, wherein the through holes (12) have a smallest width of at least 2 mm and / or the net structure consist of at least 50 % of through holes.

7. The oven of anyone of claims 1 to 5, wherein the through holes (12) have a smallest width of at least 1 mm and / or the net structure consist of at least 50 % of through holes.

8. The oven of any of the previous claims, wherein the receptacle is made of a woven, pressed, moulded or die-cast material.

## Patentansprüche

1. Ofen (10) zur Zubereitung von Nahrung (40), der Ofen umfassend;
a. eine Ofenkammer (15);
b. einem luftdurchlässigen Zubereitungskorb (22), der in der Ofenkammer (15) angeordnet ist;
c. eine Wärmequelle (18); und
d. einen Lüfter (19), der angeordnet ist, um heiße Luft in der Ofenkammer zu zirkulieren,
**dadurch gekennzeichnet, dass**
der Ofen (10) ferner einen Behälter (30; 300) umfasst, der ausgebildet ist, dass er in den Zubereitungskorb (22) passt und die Nahrung (40) aufnimmt, wobei der Behälter eine nicht steife Behälterwand (31; 301) umfasst, die zumindest teilweise durch eine Netzstruktur (35) mit Durchgangslöchern ausgebildet ist, wobei der Behälter die Nahrung vor dem Kontakt mit dem Zubereitungskorb schützt, und dadurch, dass der Zubereitungskorb drehbar in der Ofenkammer angeordnet ist und der Behälter sich zusammen mit dem Zubereitungskorb dreht.

2. Ofen nach Anspruch 1, wobei der Behälter (30; 300) entfernbar im Zubereitungskorb (22) angeordnet ist.

3. Ofen nach Anspruch 1, wobei die Netzstruktur (11) eine Antihaftfläche umfasst.

4. Ofen nach Anspruch 2, wobei die Antihaftfläche eine Beschichtung ist, die Polytetrafluorethylen, keramische Antihaftbeschichtungen oder Silikon-Antihaftbeschichtungen umfasst.

5. Ofen nach einem der vorhergehenden Ansprüche, wobei die Durchgangslöcher (12) eine rechteckige, runde, dreieckige Form aufweisen.

6. Ofen nach einem der vorhergehenden Ansprüche, wobei die Durchgangslöcher (12) eine kleinste Breite von mindestens 2 mm aufweisen und/oder die Netzstruktur aus mindestens 50 % Durchgangslöchern besteht.

7. Ofen nach einem der Ansprüche 1 bis 5, wobei die Durchgangslöcher (12) eine kleinste Breite von mindestens 1 mm aufweisen und/oder die Netzstruktur aus mindestens 50 % Durchgangslöchern besteht.

8. Ofen nach einem der vorhergehenden Ansprüche, wobei der Behälter aus einem gewebten, gepressten, geformten oder Druckgussmaterial hergestellt ist.

## Revendications

1. Four (10) pour la préparation d'aliments (40), ledit four comprenant :
a. un compartiment de four (15) ;
b. un panier de préparation perméable à l'air (22) disposé dans ledit compartiment de four (15) ;
c. une source de chaleur (18) ; et
d. un ventilateur (19) conçu pour faire circuler de l'air chaud dans ledit compartiment de four,
**caractérisé en ce que**
le four (10) comprend en outre un réceptacle (30 ; 300) conformé pour s'ajuster dans ledit panier de préparation (22) et pour recevoir lesdits aliments (40), ledit réceptacle comprenant une paroi de réceptacle non rigide (31 ; 301) composée au moins partiellement d'une structure en filet (35) dotée de trous traversants, ledit réceptacle préservant les aliments d'un contact avec le panier de préparation, et **en ce que** le panier de préparation est disposé de manière à pouvoir tourner dans le compartiment de four, le réceptacle tournant avec le panier de préparation.

2. Four selon la revendication 1, dans lequel le réceptacle (30 ; 300) est disposé de manière amovible dans le panier de préparation (22).

3. Four selon la revendication 1, dans lequel la structure en filet (11) comprend une surface non adhérente.

4. Four selon la revendication 2, dans lequel la surface non adhérente contient du polytétrafluoroéthylène, des revêtements céramiques non adhérents ou du silicone non adhérent.

5. Four selon l'une quelconque des revendications précédentes, dans lequel les trous traversants (12) ont une forme rectangulaire, circulaire ou triangulaire.

6. Four selon l'une quelconque des revendications précédentes, dans lequel les trous traversant (12) ont une largeur minimale d'au moins 2 mm et/ou la structure en filet est composée d'au moins 50 % de trous traversants.

7. Four selon l'une quelconque des revendications 1 à 5, dans lequel les trous traversant (12) ont une largeur minimale d'au moins 1 mm et/ou la structure en filet est composée d'au moins 50 % de trous traversants.

8. Four selon l'une quelconque des revendications précédentes, dans lequel le réceptacle est composé d'un matériau tissé, pressé, moulé ou moulé sous pression.
